# EUROPEAN PATENT APPLICATION

(11) **EP 4 166 511 A1**
(43) Date of publication of application: **19.04.2023**
(21) Application number: 21202534.0
(22) Date of filing: 13.10.2021
(51) Int. Cl.: C02F 1/32, C02F 1/00, G01N 33/18, G01N 21/33, G01J 1/04, G01J 1/42

(54) **UV SENSOR ARRANGEMENT IN A UV RADIATOR MODULE FOR WATER TREATMENT**

(71) Applicant: Xylem Europe GmbH, 8200 Schaffhausen (CH)
(72) Inventor: Stuckert, Mario, 31707 Bad Eilsen (DE); Kämmerer, Sven, 32107 Bad Salzuflen (DE)
(74) Representative: Lenzing Gerber Stute

(57) **Abstract**

The invention relates to a UV radiator module for water or wastewater treatment plant with a number of elongated UV radiators (1) arranged with their longitudinal axes parallel to one another in the UV radiator module, the UV radiators being arranged in two parallel rows (10a - 10k; 20a - 20k) which are spaced apart from one another, and with a UV sensor (6) which is set up to detect UV radiation emitted by the UV radiators (1), in which the UV sensor (6) is arranged between the two rows.

The invention also relates to a method of individually controlling single rows of a UV radiator module to generate a predetermined, demand-dependent radiation intensity within the water or wastewater treatment plant.

## Description

The present invention relates to a UV radiator module having the features of the preamble of claim 1, to a water or wastewater treatment system having a number of UV radiator modules, and to a method for controlling a water or wastewater treatment system.

UV radiator modules in which a number of tubular UV radiators are arranged parallel to one another are known from the prior art. The radiators usually each have an outer cladding tube transparent to UV radiation and a radiation source arranged in the cladding tube, which in many cases is designed as a low-pressure mercury amalgam radiator or an excimer radiator. These radiation sources generate UV radiation in the wavelength range around 250 nm, with which pathogens can be inactivated or killed. Radiation modules with a large number of such radiators are therefore used for drinking water disinfection or wastewater disinfection, whereby no chemicals need to be added to the treated water for disinfection and, in particular, no chlorine odor is produced in the drinking water, for example. Disinfection with such radiator modules, especially those based on low-pressure radiators, is also energy-efficient and reliable over a long period of time.

In the context of the present application, the term "UV radiator module" should be understood as an assembly with a supporting structure, generally a frame, which holds a number of UV radiators in place. The UV radiator module is intended to be lowered into a channel through which water to be treated flows and thereby passes through the module and, if the UV radiators are powered up, is irradiated with ultraviolet radiation, and thus disinfected. Such modules make installation, operation, and servicing of ultraviolet disinfection plants more practical because the individual ultraviolet sources can be mounted and held inside the module in precisely defined positions and can be connected to an external power source through common wiring. Lowering the module into the channel and lifting the module out of the channel is quicker than installing individual ultraviolet sources. In addition, the access to the ultraviolet sources for technical service is facilitated when a larger number of ultraviolet sources can be handled by lifting the module out of the respective channel.

The UV radiators in the module are arranged in parallel to one another and in rows. As to the geometry of the module, one defined direction is the direction of the longitudinal axis of each lamp, another defined direction is the direction of water flow or intended water flow through the module, which is generally transverse to the longitudinal axis. A third direction is defined by a direction transverse to the direction of water flow. While the longitudinal axis is generally vertical or aligned in an acute angle against the vertical direction, the direction of water flow and the direction transverse to the water flow are, in a real implementation, orientated approximately horizontally.

The present invention relates to UV radiator modules with two rows of lamps. A row is a number of UV radiators which are arranged parallel to each other in the direction transverse to the water flow, while the two rows are provided at a distance from each other in the direction of the water flow, so that one row is upstream and the other one is downstream.

In the case of known radiator modules, monitoring of the function of each individual source of radiation is often provided. For this purpose, a separate sensor is assigned to each UV radiator, which can be read out electronically and which then indirectly generates an indication or an alarm if the radiator unit monitored by this sensor emits a reduced radiation output or fails completely. The disadvantage with these so-called single radiator monitoring systems is the complexity of the sensor arrangement and its evaluation.

It is therefore the task of the present invention to create a UV radiator module that can be adequately monitored with less effort. Further it is the task of the invention to create a water or wastewater treatment plant with a simpler monitoring of the radiation power and to indicate a method for the control of such a water or wastewater treatment plant.

These objects are achieved by a UV radiator module with the features of claim 1, by a water or wastewater treatment plant with the features of claim 9, and by a method with the features of claim 12. Advantageous embodiments of the invention are the subject of the dependent claims.

A UV radiator module with a number of elongated UV radiators arranged with their longitudinal axes parallel to one another in the UV radiator module, the UV radiators being arranged in two parallel rows which are spaced apart from one another, and with a UV sensor which is set up to detect UV radiation emitted by the UV radiators is improved by arranging the single UV sensor between the two rows. The combination of exactly two rows of UV radiators with one UV sensor allows the construction of a powerful module with good accessibility of the individual UV radiators for example for maintenance purposes and sensor for monitoring the UV output in an integrated design. This simplifies the sensor arrangement and still opens up many options in operation, which will be detailed later in the specification.

When the UV sensor comprises a sensor housing which is tubular, and which is aligned parallel to the UV radiators within the UV radiator module, the installation is simplified.

A relatively simple sensor construction is provided when a detector or sensor element is arranged inside the sensor housing, the sensor element being sensitive to UV radiation in a line of sight parallel to a central axis of the sensor housing.

Preferably the sensor housing is UV-transparent at one end section and a mirror element is arranged at this end section, which deflects UV radiation incident transversely to the central axis of the sensor housing in the direction of the detector element. This makes it possible to use a simple sensor element and still achieve a 360° sensitivity.

In a preferred embodiment, the mirror element is rotationally symmetrical and preferably is mirror-plated on its outside.

To get representative sensor readings, the UV sensor with its UV sensitive front side or end section is preferably arranged at a position within the UV lamp module which is located centrally between two UV lamps assigned to different rows and neighboring each other, i.e. two UV lamps, one of each row, which have the shortest possible distance between them.

When the UV radiators each have a discharge length extending between two electrodes of a UV radiator along the longitudinal axis of the UV radiator, and in that the UV sensor (with its end face) is arranged at a position within the module which is located along the discharge length of the adjacent UV radiators and at a distance of at least 10% of the discharge length from the electrodes of the UV radiators, the sensor signal is less disturbed by anisotropies in the emission characteristics of the individual UV lamps.

A water or wastewater treatment plant with a number of UV radiator modules as described above is particularly advantageous.

The complexity of the installation and the sensor arrangement is simplified if each UV lamp module is equipped with exactly one UV sensor.

The UV sensors of the UV lamp modules are preferably connected to a common control unit and that the control unit is designed to dim or switch off individual rows of the UV lamp modules. This adds flexibility in operation of the plant.

A method for controlling a water or wastewater treatment plant with the following process steps:
- Provision of a number of UV radiator modules, each UV radiator module being equipped with a number of elongated UV radiators arranged with their longitudinal axes parallel to each other in the UV radiator module, the UV radiators being arranged in two parallel rows which are spaced apart from each other, and with a UV sensor which is set up to detect UV radiation emitted by the UV radiators,
- Switching on one row of each UV radiator module, and capturing the generated sensor signal of each UV sensor while operating the individual rows of a UV lamp module adjacent to the UV sensor,
- individually controlling the single rows to generate a predetermined, demand-dependent radiation intensity within the water or wastewater treatment plant
   is especially advantageous because it allows almost the same versatility as with single lamp sensor control, although the total number of sensors is significantly reduced in direct comparison.

It may be preferable for controlling the radiation intensity within a UV radiator module, one row is switched off and the respective other row is kept in operation. In other circumstances it may be preferred controlling the radiation intensity within a UV radiator module with both rows operated at reduced power. Finally, a very effective method of controlling the radiation intensity within a UV radiator module is provided when the power of the rows of UV radiators is controlled in dependence on the sensor signal.

In the following, an embodiment of the present invention is described with reference to the drawings, in which:
- Fig. 1:: shows a part of a UV radiator module in a cross section;
- Fig. 2:: shows an axial top view of the module of fig. 1 with the symmetry axis of the radiators perpendicular to the plane of the drawing;
- Fig. 3:: shows detail A of fig. 2 in an enlarged view; and
- Fig. 4:: shows a sensor in a longitudinal cross section along its symmetry axis.

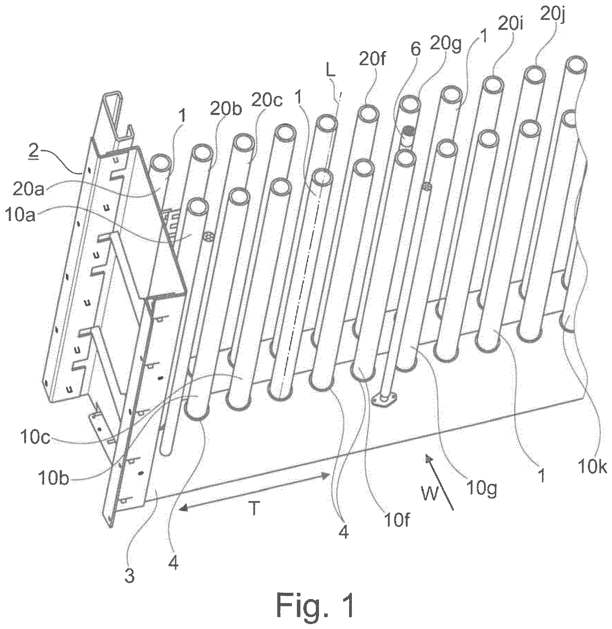

Fig. 1 shows a part of a UV radiator module in a cross section. The module comprises a number of UV radiators 1 which are essentially identical. The directions of interest in this representation are an intended water flow direction W, a transverse direction T and a longitudinal axis L of a UV radiator 1.

A frame 2 of the UV radiator module provides mechanical stability and holds the UV radiators 1 in place. A bottom plate 3 has openings 4 to hold the lower ends of the UV radiators 1 in place. A similar top plate holding the opposite upper ends of the UV radiators 1 is not shown in this figure. The further details of the frame 2 are not essential and may vary in different applications.

The openings and thus the UV radiators 1 are arranged in two parallel lines or rows in the direction T. To individually designate the UV radiators 1, the UV radiators of the upstream row are numbered 10a - 10k, while the UV radiators 1 of the downstream row are numbered 20a - 20k. Avoiding a too complex figure, not all of the individual UV radiators are numbered.

A UV sensor 6 is placed between the two rows, namely between the UV radiators 10f, 10g, 20f and 20g. The sensor 6 is mounted on a rod that is fixed to the top plate. While the position between the rows of UV radiators is visible, the position in L direction can be an arbitrarily chosen position in the L direction. Preferably, the sensor 6 is positioned at a distance from the end of the UV radiators in the L direction T at least 10% of total length of the radiators away from an upper or lower end of the UV radiators.

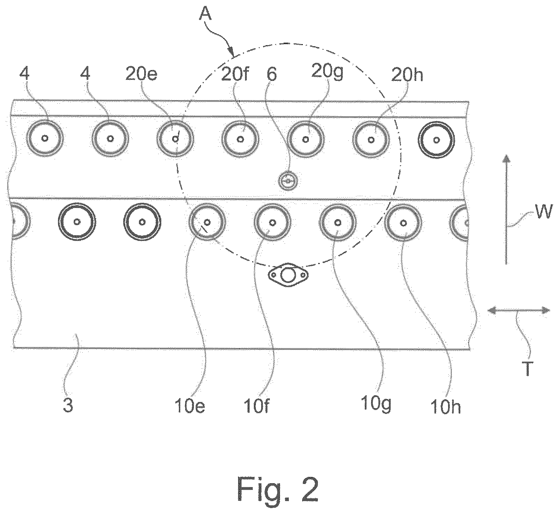

Fig. 2 shows the area in the vicinity of the sensor 6 in greater detail and in a plan view in the direction L of the longitudinal axes of the UV radiators 1, which is here perpendicular to the plane of the drawing.

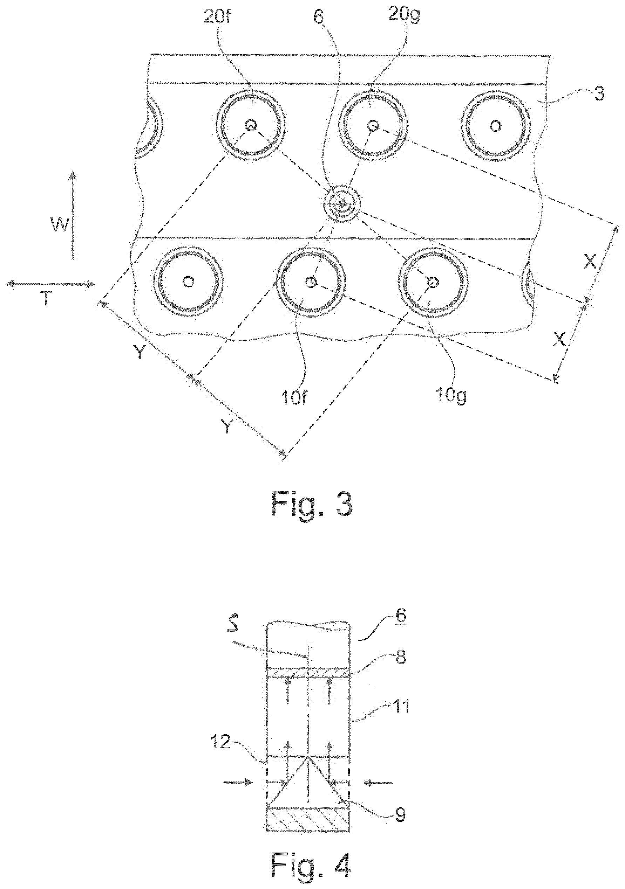

Fig. 3 shows the area around the sensor 6 in an enlarged view in the same perspective as fig. 2. It can be seen that the upstream row of UV radiators 10a - 10k, of which only 10e - 10h are seen, comprises UV radiators which are aligned in a straight line in direction T. The upstream row has gaps between neighboring UV radiators e.g., between 10f and 10g. The downstream row of UV radiators 20a - 20k is arranged in the same manner, but offset in T direction so that, seen in direction W of the water flow, behind each gap in the upstream row, there is a UV radiator of the downstream row. This is known from the prior art and increases the efficiency of the irradiation effect.

What can be seen in greater detail in fig. 3 is that the sensor 6 is positioned, in the plane of the drawing, between the UV radiators 10f, 10g, 20f and 20g, and more precisely in this embodiment in the center of a parallelogram the corners of which are the centers of the said UV radiators. The measuring in this case is that the two UV radiators 10f and 20g are closer to the sensor 6, each at a distance x from the center of the sensor 6, and the two UV radiators 10g and 20f are farther away from the sensor 6, each at a distance y.

Fig. 4 shows a schematic section through the sensor 6 along its longitudinal axis S which, when mounted in the UV radiator module, is parallel to L. The sensor 6 may in a preferred embodiment comprise a UVC-sensitive semiconductor sensor element 8 which itself is sensitive in the S direction, and further comprise a lens or mirror element 9 in the form of a rotationally symmetric cone with a 90° tip angle in this embodiment, which directs UV radiation (represented as arrows in fig. 4) from a 360° circumferential view onto the sensor element 8. Theoretically ideal would be that radiation from any horizontal direction in fig. 3 or 4 is deflected by 90° into the S direction, i.e., upwards in fig. 3 onto the sensor element. Deviations from this ideal model are in practice possible, but it is preferred that the sensor 6 is uniformly sensitive in the circumferential direction, so that UV radiation coming from any direction and especially from the neighboring UV radiators equally contributes to the signal produced by the sensor 6. Preferably, no angular range should be shadowed. The sensor element is mounted in a tubular housing 11 which is not transparent except for a transparent end section 12 in which the cone of the mirror element 9 is positioned. The sensor element 8 is spaced apart from the mirror element 9 inside the tubular sensor housing 11 to reduce or prevent diffuse light from reaching the sensor element 8.

In operation, sensor 6 in its position and with its angular sensitivity detects and produces a signal that is essentially representative of the sum of the incident UV radiation at its position. However, there is more information that can be derived from that signal. Upon installation of the UV radiator module with the sensor, the sensor 6 can be calibrated by switching on one of the two rows first and determining the signal that this row produces in the sensor at full power and preferably also at dimmed states with reduced power levels. After that, the first row can be switched off and the second row can be powered up, again measuring, and saving the sensor signals for full power and reduced power modes. Finally, both rows can be switched on and signals at different power modes can be recorded.

After this calibration, the sensor signal can in regular operation be used by a control unit to monitor the total power that is produced by the UV radiator module, to adjust the power in a feedback-control mode to a desired power level or even to identify malfunctions or ageing effects in the module.

For example, one of the rows can, in operation, be dimmed and the reduction of the sensor signal be recorded. This indicates the relative contribution of the two rows to the total radiation power output. By switching off one row, the power output of the other row can be determined and vice versa. It may even be worthwhile to operate one row at a high power level and to switch off the other row completely if the necessary radiation power level is achievable. This mode of operation may be more energy efficient or may be extending the service life of the whole module than the mode in which both rows operate at a dimmed lower power level.

A wastewater or drinking water treatment plant may comprise many UV radiator modules of the type that is described above. A control unit may read out each UV sensor of the modules and consequently carry out the steps mentioned above for each UV radiator module. Thus, the whole plant can be controlled in a way that the status of the individual rows can be monitored or evaluated and that the plant produces the necessary UV radiation power while saving energy and/or extending the service life of the UV radiators.

## Claims

1. UV radiator module, for water or waste water treatment, with a number of elongated UV radiators (1) arranged with their longitudinal axes parallel to one another in the UV radiator module, the UV radiators being arranged in two parallel rows (10a - 10k; 20a - 20k) which are spaced apart from one another, and with a UV sensor (6) which is set up to detect UV radiation emitted by the UV radiators (1), **characterized in that** the UV sensor (6) is arranged between the two rows.

2. UV radiator module according to claim 1, **characterized in that** the UV sensor (6) comprises a sensor housing (11) which is tubular, and which is aligned parallel to the UV radiators (1) within the UV radiator module.

3. UV radiator module according to claim 2, **characterized in that** a sensor element (8) is arranged inside the sensor housing (11), the sensor element (8) being sensitive to UV radiation in a line of sight parallel to a central axis (S) of the sensor housing (11).

4. UV radiator module according to claim 2 or claim 3, **characterized in that** the sensor housing (11) is UV-transparent at one end section (12) and that a mirror element (9) is arranged at this end section, which deflects UV radiation incident transversely to the central axis (S) of the sensor housing (11) in the direction of the sensor element (8).

5. UV radiator module according to claim 4, **characterized in that** the mirror element (9) is rotationally symmetrical.

6. UV radiator module according to claim 4 or 5, **characterized in that** the mirror element (9) is mirror-plated on its surface.

7. UV radiator module according to one of the preceding claims, **characterized in that** the UV sensor (6) with its end section is arranged at a position within the UV lamp module which is located centrally between two UV lamps (10f, 20g) assigned to different rows and neighboring each other.

8. UV radiator module according to Claim 4, **characterized in that** the UV radiators (1) each have a discharge length extending between two electrodes of a UV radiator along the longitudinal axis (L) of the UV radiator, and **in that** the UV sensor (6) is arranged with its end section at a position within the module which is located along the discharge length of the adjacent UV radiators (10f, 20g) and at a distance of at least 10% of the discharge length from the electrodes of the UV radiators.

9. Water or wastewater treatment plant with a number of UV radiator modules according to any of the preceding claims.

10. Water or wastewater treatment plant according to claim 9, **characterized in that** each UV lamp module is equipped with exactly one UV sensor (6).

11. Water or wastewater treatment plant according to claim 9 or 10, **characterized in that** the UV sensors (6) of the UV lamp modules are connected to a common control unit and that the control unit is designed to dim or switch off individual rows of the UV lamp modules.

12. Method for controlling a water or wastewater treatment plant with the following process steps:
- Provision of a number of UV radiator modules, each UV radiator module being equipped with a number of elongated UV radiators arranged with their longitudinal axes parallel to each other in the UV radiator module, the UV radiators being arranged in two parallel rows which are spaced apart from each other, and with a UV sensor which is set up to detect UV radiation emitted by the UV radiators,
- Switching on one row of each UV radiator module, and capturing the generated sensor signal of each UV sensor while operating the individual rows of a UV lamp module adjacent to the UV sensor,
- individually controlling the single rows to generate a predetermined, demand-dependent radiation intensity within the water or wastewater treatment plant.

13. Method according to claim 12, **characterized in that** for controlling the radiation intensity within a UV radiator module, one row is switched off and the respective other row is kept in operation.

14. Method according to claim 12, **characterized in that** for controlling the radiation intensity within a UV radiator module both rows are operated at reduced power.

15. Method according to claim 13 or 14, **characterized in that** for controlling the radiation intensity within a UV radiator module the power of the rows of UV radiators is controlled in dependence on the sensor signal.
